# EUROPEAN PATENT APPLICATION

(11) **EP 4 451 592 A1**
(43) Date of publication of application: **23.10.2024**
(21) Application number: 21967790.3
(22) Date of filing: 17.12.2021
(51) Int. Cl.: H04L 1/18

(54) **DATA RETRANSMISSION METHOD AND DEVICE, AND STORAGE MEDIUM AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2021/139337
(87) International publication number: WO 2023/108658

(57) **Abstract**

The present disclosure belongs to the technical field of communications. Provided are a data retransmission method and device, and a storage medium and an apparatus. The method comprises: in response to a round-trip time (RTT) timer timing out, and a receiving UE not sending a PSFCH, determining, on the basis of a hybrid automatic repeat request (HARQ) feedback mode corresponding to the receiving UE, whether to start a retransmission timer. By means of the method provided in the present disclosure, power consumption of a UE and a waste of resources can be avoided.

## Description

### TECHNICAL FIELD

The disclosure relates to the field of communication technology, more particularly, to a data retransmission method, a data retransmission apparatus, a storage medium and a device.

### BACKGROUND

In a communication system, a sidelink communication mode is introduced to realize direct communication between user equipment (UEs). When the UEs communicate directly with each other, they may interact using a hybrid automatic repeat request (HARQ) feedback mode. There are two HARQ feedback modes, namely, feeding back an acknowledgement (ACK) or a negative acknowledgement (NACK), and feeding back only a NACK. For the mode of feeding back an ACK or a NACK, when data reception of a receiving UE succeeds, the receiving UE may feed back an ACK to a transmitting UE. When data reception of the receiving UE fails, the receiving UE may feed back a NACK to the transmitting UE or it does not give any feedback. For the mode of feeding back only a NACK, when data reception of the receiving UE fails, the receiving UE may feed back a NACK. When data reception of the receiving UE succeeds, the receiving UE does not give any feedback.

However, in the related art, uplink transmission resources of a cellular network may be reused during sidelink between UEs. The UEs are unable to perform uplink transmission and sidelink transmission and reception at the same time. Thus, when sidelink transmission resources and the uplink transmission resources of the cellular network are overlapped, which data should be sent first may be determined according to priorities of sidelink data and uplink data to be sent. If the priority of the uplink data to be sent is higher, transmission of the sidelink data may be failed, which may cause disorganization of the HARQ feedback mechanism, thereby leading to power consumption of UE or resource waste.

In detail, if the HARQ feedback mode is feeding back only a NACK, when data reception of the receiving UE fails, the receiving UE may send a NACK to the transmitting UE and start a retransmission timer at the same time to receive data retransmitted by the transmitting UE. In this case, if the NACK cannot be successfully sent to the transmitting UE due to a transmission conflict between the sidelink data and the uplink data to be sent and the lower priority of the sidelink data. If the transmitting UE cannot receive the feedback and considers that the data reception of the receiving UE succeeds, and thus the transmitting UE may not retransmit the data. Therefore, the retransmission timer started by the receiving UE simply cannot receive data retransmitted by the transmitting UE, which may cause power consumption of UE and resource waste.

Alternatively, if the HARQ feedback mode is feeding back an ACK or a NACK, when the receiving UE receives the data successfully, it sends an ACK to the transmitting UE. If the ACK cannot be successfully sent to the transmitting UE due to the transmission conflict between the sidelink data and the uplink data to be sent and the lower priority of the sidelink data, the transmitting UE cannot receive the feedback and considers that data reception of the receiving UE fails, and thus it may retransmit the data, which may also cause power consumption of UE and resource waste.

### SUMMARY

The disclosure provides a data retransmission method, a data retransmission apparatus, a storage medium and a device, to solve the technical problem that the data retransmission method in the related art easily leads to power consumption of user equipment (UE) and resource waste.

According to a first aspect of embodiments of the disclosure, a data retransmission method, performed by a receiving UE, is provided. The method includes:
in response to a round trip time (RTT) timer being expired and the receiving UE not sending a physical sidelink feedback channel (PSFCH), determining, based on a hybrid automatic repeat request (HARQ) feedback mode corresponding to the receiving UE, whether to start a retransmission timer.

According to a second aspect of embodiments of the disclosure, a data retransmission apparatus is provided. The apparatus includes:
a determining module, configured to, in response to a RTT timer being expired and a receiving UE not sending a PSFCH, determine, based on a HARQ feedback mode corresponding to the receiving UE, whether to start a retransmission timer.

According to a third aspect of embodiments of the disclosure, a communication device is provided. The communication device includes a processor and a memory having a computer program stored thereon. When the computer program is executed by the processor, the device is caused to perform the method of the first aspect.

According to a fourth aspect of embodiments of the disclosure, a communication device is provided. The communication device includes a processor and an interface circuit.

The interface circuit is configured to receive code instructions and transmit them to the processor.

The processor is configured to run the code instructions to perform the method of embodiments of the first aspect.

According to a fifth aspect of embodiments of the disclosure, a computer readable storage medium having instructions stored thereon is provided. When the instructions are executed, the method of embodiments of the first aspect is implemented.

In the data retransmission method, the data retransmission apparatus, the storage medium and the device provided in embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

Additional aspects and advantages of the disclosure will be given in part in the following descriptions, become apparent in part from the following descriptions, or be learned from the practice of the disclosure.

### BRIEF DESCRIPTION OF THE DRAWINGS

Above and/or additional aspects and advantages of the disclosure will become apparent and more readily appreciated from the following descriptions made with reference to the accompanying drawings, in which:
FIG. 1 is a flowchart of a data retransmission method provided by an embodiment of the disclosure.
FIG. 2 is a flowchart of a data retransmission method provided by an embodiment of the disclosure.
FIG. 3 is a flowchart of a data retransmission method provided by an embodiment of the disclosure.
FIG. 4 is a flowchart of a data retransmission method provided by an embodiment of the disclosure.
FIG. 5 is a flowchart of a data retransmission method provided by an embodiment of the disclosure.
FIG. 6 is a flowchart of a data retransmission method provided by an embodiment of the disclosure.
FIG. 7 is a flowchart of a data retransmission method provided by an embodiment of the disclosure.
FIG. 8 is a flowchart of a data retransmission method provided by an embodiment of the disclosure.
FIG. 9 is a block diagram of a data retransmission apparatus provided by an embodiment of the disclosure.
FIG. 10 is a block diagram of a user equipment provided by an embodiment of the disclosure.
FIG. 11 is a block diagram of a network device provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in embodiments of the disclosure are only for the purpose of describing specific embodiments, and are not intended to limit the embodiments of the disclosure. The singular forms of "a" and "the" used in embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of embodiments of the disclosure, the first information may also be referred to as the second information, and similarly, the second information may also be referred to as the first information. Depending on the context, the term "if' as used herein can be interpreted as "when", "while" or "in response to determining".

Embodiments of the disclosure are described in detail below, and examples of which are illustrated in the accompanying drawings, in which the same or similar symbols indicate the same or similar elements. Embodiments described below with reference to the accompanying drawings are exemplary and are intended to be used to explain the disclosure and are not to be construed as limiting the disclosure.

A data retransmission method, a data retransmission apparatus, a storage medium and a device are described in detail below with reference to the accompanying drawings.

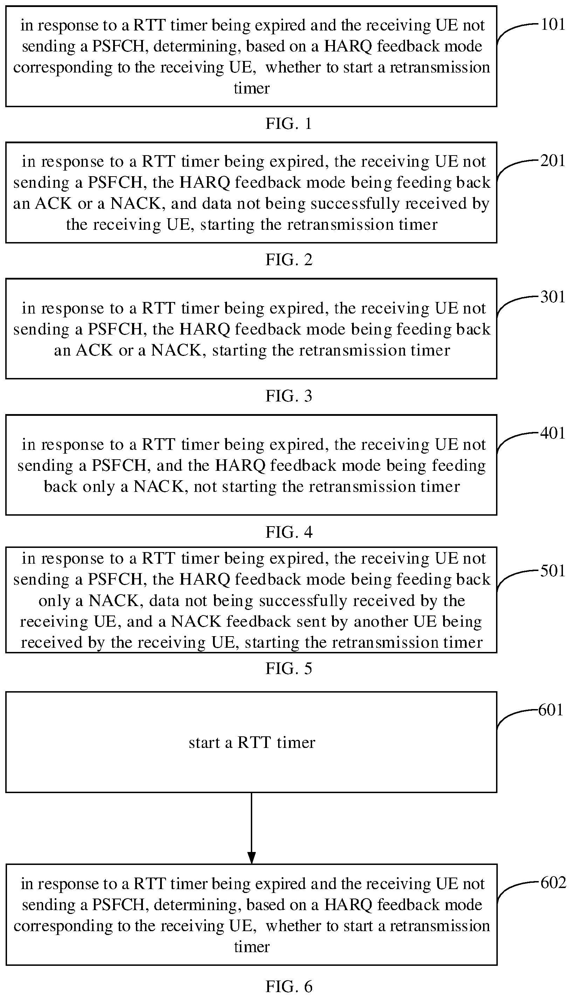

FIG. 1 is a flowchart of a data retransmission method provided by an embodiment of the disclosure. The method is performed by a receiving user equipment (UE). As illustrated in FIG. 1, the data retransmission method includes the following steps.

At step 101, in response to a round trip time (RTT) timer being expired and the receiving UE not sending a physical sidelink feedback channel (PSFCH), whether to start a retransmission timer is determined based on a hybrid automatic repeat request (HARQ) feedback mode corresponding to the receiving UE.

It is noted that, in an embodiment of the disclosure, the UE may be a device that provides voice and/or data connectivity to a user. The UE may communicate with one or more core networks via a Radio Access Network (RAN). The UE may be an Internet of Things (IoT) terminal, such as a sensor device, a cell phone (or "cellular" phone), and a computer with an IoT terminal. For example, the UE may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, or a user agent. Alternatively, the UE may be an unmanned aerial vehicle device. Alternatively, the UE may be an in-vehicle device, for example, an electronic control unit (ECU) having a wireless communication function, or a wireless UE external to the ECU. Alternatively, the UE can also be a roadside device, for example, a street light, a signal light, or other roadside devices having wireless communication function.

In an embodiment of the disclosure, a transmitting UE may send data to the receiving UE by means of any of multicast, unicast, or broadcast.

In an embodiment of the disclosure, the HARQ feedback mode described above may include any of the following modes.

The first mode is feeding back an acknowledgement (ACK) or a negative acknowledgement (NACK).

The second mode is feeding back a NACK only.

For the first feedback mode, when data reception of the receiving UE succeeds, the receiving UE may feed back an ACK to the transmitting UE. When data reception of the receiving UE fails, the receiving UE may feed back a NACK to the transmitting UE or may not give any feedback.

For the second feedback mode, when data reception of the receiving UE fails, the receiving UE may feed back a NACK to the transmitting UE. When data reception of the receiving UE succeed, the receiving UE does not give any feedback.

In an embodiment of the disclosure, the above PSFCH can be used to transmit a HARQ feedback (i.e., an ACK feedback or a NACK feedback) sent by the receiving UE.

In an embodiment of the disclosure, the receiving UE not sending a PSFCH may include following cases.

In the first case, based on the HARQ feedback mode and a data reception result of the receiving UE (i.e., successful reception or failed reception), it is determined that there is no need to send a HARQ feedback via the PSFCH. For example, for the mode of feeding back an ACK or a NACK, when data reception of the receiving UE fails, the receiving UE does not give any feedback. Or, for the mode of feeding back only a NACK, when data reception of the receiving UE succeeds, the receiving UE does not give any feedback. Since there is no need for the receiving UE to give any feedback, there is no need to send the HARQ feedback via the PSFCH.

In the second case, based on the HARQ feedback mode and the data reception result of the receiving UE (i.e., successful reception or failed reception), it is determined that the HARQ feedback needs to be sent through the PSFCH, but the HARQ feedback is unable to be sent due to a transmission conflict between the HARQ feedback and other data (e.g., uplink data to be sent) and a lower priority of the HARQ feedback compared to a priority of other data. For example, for the mode of feeding back an ACK or a NACK, when data reception of the receiving UE succeeds, the receiving UE sends an ACK to the transmitting UE. Or, when data reception of the receiving UE fails, the receiving UE sends a NACK to the transmitting UE. For the mode of feeding back only a NACK, when data reception of the receiving UE fails, the receiving UE sends a NACK to the transmitting UE. In the above cases, the HARQ feedback may be send through the PSFCH. However, due to the above reasons (i.e., the transmission conflict between the HARQ feedback and other data and the lower priority of the HARQ feedback), the HARQ feedback cannot be sent through the PSFCH.

On this basis, in an embodiment of the disclosure, determining whether to start the retransmission timer based on the HARQ feedback mode corresponding to the receiving UE may include at least one of the following methods.

In the first method, in response to the HARQ feedback mode being feeding back an ACK or a NACK and data not being successfully received by the receiving UE, the retransmission timer is started.

In an embodiment of the disclosure, based on the above descriptions on "some scenarios for the HARQ feedback mode and some scenarios for the receiving UE not sending the PSFCH", for the above first method, when a current HARQ feedback mode of the receiving UE is feeding back an ACK or a NACK and data is not successfully received by the receiving UE, if the receiving UE does not send a PSFCH, it indicates the following two scenarios.

In scenario 1a, the receiving UE determines not to give any feedback to the transmitting UE, i.e., the receiving UE does not send a PSFCH.

In scenario 1b, the receiving UE determines to feed back a NACK to the transmitting UE, but the receiving UE is currently unable to send the NACK to the transmitting UE (i.e., the receiving UE does not send a PSFCH) due to a transmission conflict between the NACK and other data and a lower priority of the NACK.

Based on the above two scenarios, the transmitting UE is unable to receive a feedback from the receiving UE. In this case, if the feedback mode is feeding back an ACK or a NACK, the transmitting UE may determine that the receiving UE fails in receiving the data and may transmit the data again. On this basis, in an embodiment of the disclosure, the receiving UE may start the retransmission timer to monitor a physical sidelink control channel (PSCCH) to receive the data retransmitted by the transmitting UE, which avoids the situation where the receiving UE does not start the retransmission timer, but the transmitting UE retransmits the data, thereby reducing the power consumption of UE and avoiding resource waste.

In the second method, in response to the HARQ feedback mode being feeding back an ACK or a NACK, the retransmission timer is started.

In an embodiment of the disclosure, based on the above descriptions on "some scenarios for the HARQ feedback mode and some scenarios for the receiving UE not sending the PSFCH", for the above second method, when the current HARQ feedback mode of the receiving UE is feeding back an ACK or a NACK, if the receiving UE does not send a PSFCH, it usually indicates the following three scenarios.

In scenario 2a, when the receiving UE fails to receive the data, it determines not to give any feedback to the transmitting UE, i.e., the receiving UE does not send a PSFCH.

In scenario 2b, when the receiving UE fails to receive the data, the receiving UE determines to send a NACK to the transmitting UE, but the receiving UE is currently unable to send the NACK to the transmitting UE (i.e., the receiving UE does not send a PSFCH) due to a transmission conflict between the NACK and other data and a lower priority of the NACK.

In scenario 2c, the receiving UE successfully receives the data, and the receiving UE determines to send an ACK to the transmitting UE, but the receiving UE is currently unable to send the ACK to the transmitting UE (i.e., the receiving UE does not send a PSFCH) due to a transmission conflict between the ACK and other data and a lower priority of the ACK.

Based on the above three scenarios, the transmitting UE is unable to receive a feedback from the receiving UE. In this case, if the feedback mode is feeding back an ACK or a NACK, the transmitting UE may determine that the receiving UE fails in receiving the data, and the transmitting UE may retransmit the data. On this basis, in an embodiment of the disclosure, the receiving UE may start the retransmission timer. During the operation of the retransmission timer, the receiving UE may monitor the PSCCH to receive the data retransmitted by the transmitting UE, so as to avoid the situation in which the receiving UE does not start the retransmission timer but the transmitting UE retransmits the data, thereby reducing the power consumption of UE and avoiding resource waste.

In the third method, in response to the HARQ feedback mode being feeding back only a NACK, the retransmission timer is not started.

In an embodiment of the disclosure, based on the above descriptions on "some scenarios for the HARQ feedback mode and some scenarios for the receiving UE not sending the PSFCH", for the above third method, when the current HARQ feedback mode of the receiving UE is feeding back only a NACK, if the receiving UE does not send a PSFCH, it indicates the following two scenarios.

In scenario 3a, the receiving UE does not successfully receive the data and the receiving UE determines to send a NACK to the transmitting UE, but the receiving UE is currently unable to send the NACK to the transmitting UE (i.e., the receiving UE does not send a PSFCH) due to a transmission conflict between the NACK and other data and a lower priority of the NACK.

In scenario 3b, when the receiving UE successfully receives the data, the receiving UE determines not to give any feedback to the transmitting UE.

Based on the above two scenarios, the transmitting UE is unable to receive a feedback from the receiving UE. If the feedback mode is feeding back only a NACK, the transmitting UE may determine that the receiving UE has successfully received the data and the transmitting UE may not retransmit the data. On this basis, in an embodiment of the disclosure, the receiving UE may not start the retransmission timer, so as to avoid the situation in which the receiving UE starts the retransmission timer but the transmitting UE does not retransmit the data, thereby reducing the power consumption of UE and avoiding resource waste.

In the fourth method, in response to the HARQ feedback mode being feeding back only a NACK, data not being successfully received by the receiving UE, and a NACK feedback sent by another UE in a same group being received by the receiving UE, the retransmission timer is started.

It should be noted that, in an embodiment of the disclosure, the fourth method is used for a multicast transmission scenario.

In an embodiment of the disclosure, based on the above descriptions on "some scenarios for the HARQ feedback mode and some scenarios for the receiving UE not sending the PSFCH", for the above fourth method, when the current HARQ feedback mode of the receiving UE is feeding back only a NACK and data is not successfully received by the receiving UE, if the receiving UE does not send a PSFCH, it indicates the following scenario.

In scenario 4a, the receiving UE determines to send a NACK to the transmitting UE, but the receiving UE is currently unable to send the NACK to the transmitting UE (i.e., the receiving UE does not send a PSFCH) due to a transmission conflict between the NACK and other data and a lower priority of the NACK.

Based on the above scenario, the receiving UE does not successfully sent the NACK to the transmitting UE, and if the receiving UE receives a NACK feedback from another UE in the same group, it means that the transmitting UE may also receive the NACK feedback from the another UE. In this case, the transmitting UE may know that the data is not successfully sent, and it may retransmit the data by means of multicast. The receiving UE may start the retransmission timer, and the receiving UE may monitor the PSCCH to receive the retransmitted data from the transmitting UE during operation of the retransmission timer, so as to avoid the situation in which the receiving UE does not start the retransmission timer but the transmitting UE still retransmits the data, thereby reducing the power consumption of UE and avoiding resource waste.

In the data retransmission method, the data retransmission apparatus, the storage medium and the device provided in the embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

FIG. 2 is a flowchart of a data retransmission method provided by an embodiment of the disclosure. The method is performed by a receiving UE. As illustrated in FIG. 2, the data retransmission method includes the following step.

At step 201, in response to a RTT timer being expired and the receiving UE not sending a PSFCH, and the HARQ feedback mode being feeding back an ACK or a NACK and data not being successfully received by the receiving UE, the retransmission timer is started.

Relevant description of step 201 can be referred to the descriptions of the above embodiments, which will not be repeated herein.

In the data retransmission method, the data retransmission apparatus, the storage medium and the device provided in the embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

FIG. 3 is a flowchart of a data retransmission method provided by an embodiment of the disclosure. The method is performed by a receiving UE. As illustrated in FIG. 3, the data retransmission method includes the following step.

At step 301, in response to a RTT timer being expired and the receiving UE not sending a PSFCH, and the HARQ feedback mode being feeding back an ACK or a NACK, the retransmission timer is started.

Relevant description of step 301 can be referred to the descriptions of the above embodiments, which will not be repeated herein.

In the data retransmission method, the data retransmission apparatus, the storage medium and the device provided in the embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

FIG. 4 is a flowchart of a data retransmission method provided by an embodiment of the disclosure. The method is performed by a receiving UE. As illustrated in FIG. 4, the data retransmission method includes the following step.

At step 401, in response to a RTT timer being expired and the receiving UE not sending a PSFCH, and the HARQ feedback mode being feeding back only a NACK, the retransmission timer is not started.

Relevant description of step 401 can be referred to the descriptions of the above embodiments, which will not be repeated herein.

In the data retransmission method, the data retransmission apparatus, the storage medium and the device provided in the embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

FIG. 5 is a flowchart of a data retransmission method provided by an embodiment of the disclosure. The method is performed by a receiving UE. As illustrated in FIG. 5, the data retransmission method includes the following step.

At step 501, in response to a RTT timer being expired and the receiving UE not sending a PSFCH, the HARQ feedback mode being feeding back only a NACK, data not being successfully received by the receiving UE, and a NACK feedback sent by another UE being received by the receiving UE, the retransmission timer is started.

Relevant description of step 501 can be referred to the descriptions of the above embodiments, which will not be repeated herein.

In the data retransmission method, the data retransmission apparatus, the storage medium and the device provided in the embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

FIG. 6 is a flowchart of a data retransmission method provided by an embodiment of the disclosure. The method is performed by a receiving UE. As illustrated in FIG. 6, the data retransmission method includes the following steps.

At step 601, a RTT timer is started.

In an embodiment of the disclosure, a method of starting the RTT timer may include:
in response to the receiving UE not sending a PSFCH, starting the RTT timer in a first time slot after a PSFCH resource location.

At step 602, in response to the RTT timer being expired and the receiving UE not sending a PSFCH, whether to start a retransmission timer is determined based on a HARQ feedback mode corresponding to the receiving UE.

Relevant description of step 602 can be referred to the descriptions of the above embodiments, which will not be repeated herein.

In the data retransmission method, the data retransmission apparatus, the storage medium and the device provided in the embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

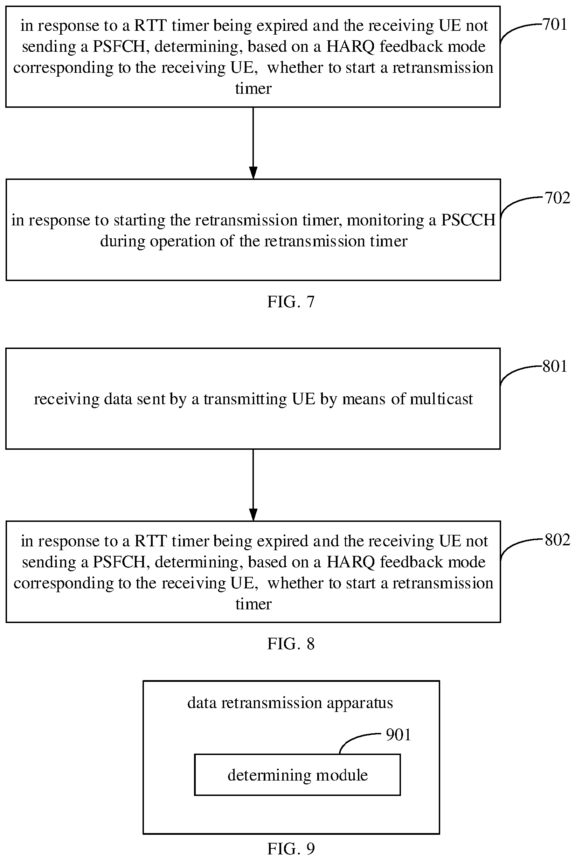

FIG. 7 is a flowchart of a data retransmission method provided by an embodiment of the disclosure. The method is performed by a receiving UE. As illustrated in FIG. 7, the data retransmission method includes the following steps.

At step 701, in response to a RTT timer being expired and the receiving UE not sending a PSFCH, whether to start a retransmission timer is determined based on a HARQ feedback mode corresponding to the receiving UE.

Relevant description of step 701 can be referred to the descriptions of the above embodiments, which will not be repeated herein.

At step 702, in response to starting a retransmission timer, a PSCCH is monitored during operation of the retransmission timer.

In an embodiment of the disclosure, the receiving UE monitors the PSCCH only in a duration in which the retransmission timer is operated, to receive the data retransmitted by the transmitting UE, to save power.

In the data retransmission method, the data retransmission apparatus, the storage medium and the device provided in the embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

FIG. 8 is a flowchart of a data retransmission method provided by an embodiment of the disclosure. The method is performed by a receiving UE. As illustrated in FIG. 8, the data retransmission method includes the following steps.

At step 801, data sent by a transmitting UE is received by the receiving UE by means of multicast.

At step 802, in response to a RTT timer being expired and the receiving UE not sending a PSFCH, whether to start a retransmission timer is determined based on a HARQ feedback mode corresponding to the receiving UE.

Relevant description of step 802 can be referred to the descriptions of the above embodiments, which will not be repeated herein.

In the data retransmission method, the data retransmission apparatus, the storage medium and the device provided in the embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

FIG. 9 is a block diagram of a data retransmission apparatus provided by an embodiment of the disclosure. As illustrated in FIG. 9, the apparatus includes:
a determining module 901, configured to, in response to a RTT timer being expired and a receiving UE not sending a PSFCH, determine, based on a HARQ feedback mode corresponding to the receiving UE, whether to start a retransmission timer.

In the data retransmission apparatus provided in embodiments of the disclosure, when the RTT timer of the receiving UE is expired and the receiving UE does not send a PSFCH, the receiving UE determines, based on the HARQ feedback mode corresponding to the receiving UE, whether or not to start the retransmission timer, to avoid situations that "the receiving UE starts the retransmission timer, but the transmitting UE does not retransmit data" and "the receiving UE does not start the retransmission timer, but the transmitting UE retransmits data", thereby saving power consumption of the UE and avoiding resource waste.

In an embodiment of the disclosure, the determining module is further configured to:
in response to the HARQ feedback mode being feeding back an ACK or a NACK and data not being successfully received by the receiving UE, start the retransmission timer;
in response to the HARQ feedback mode being feeding back an ACK or a NACK, start the retransmission timer;
in response to the HARQ feedback mode being feeding back only a NACK, not start the retransmission timer; and
in response to the HARQ feedback mode being feeding back only a NACK, data not being successfully received by the receiving UE, and a NACK feedback sent by another UE being received by the receiving UE, start the retransmission timer.

In an embodiment of the disclosure, the apparatus is further configured to:
in response to starting the retransmission timer, monitor a PSCCH during operation of the retransmission timer.

In an embodiment of the disclosure, the apparatus is further configured to:
start the RTT timer.

In an embodiment of the disclosure, the apparatus is further configured to:
in response to the receiving UE not sending a PSFCH, start the RTT timer in a first time slot after a PSFCH resource location.

In an embodiment of the disclosure, the apparatus is further configured to:
receive data sent by a transmitting UE by means of multicast.

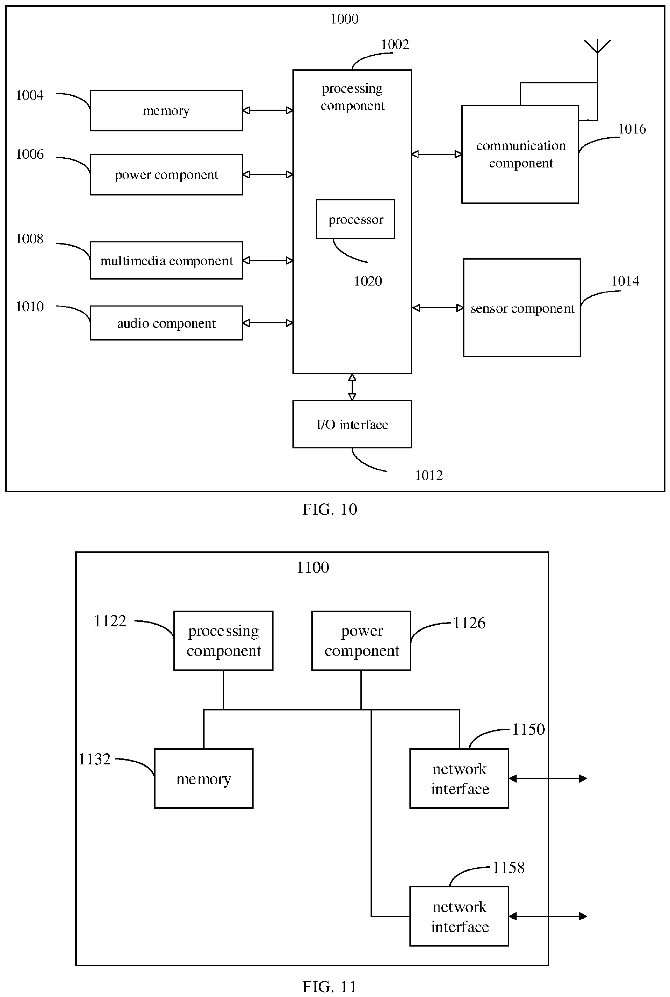

FIG. 10 is a block diagram illustrating a UE 1000 according to an embodiment. For example, the UE 1000 may be a mobile phone, a computer, a digital broadcasting terminal device, a message transceiver device, a game console, a tablet device, a medical device, a fitness device and a personal digital assistant.

As illustrated in FIG. 10, the UE 1000 may include at least one of the following components: a processing component 1002, a memory 1004, a power component 1006, a multimedia component 1008, an audio component 1010, an input/output (I/O) interface 1012, a sensor component 1013, and a communication component 1016.

The processing component 1002 typically controls overall operations of the UE 1000, such as the operations associated with display, telephone calls, data communications, camera operations, and recording operations. The processing component 1002 may include at least one processor 1020 for execute instructions to perform all or part of the steps in the above described methods. Moreover, the processing component 1002 may include at least one module which facilitate the interaction between the processing component 1002 and other components. For example, the processing component 1002 may include a multimedia module to facilitate the interaction between the multimedia component 1008 and the processing component 1002.

The memory 1004 is configured to store various types of data to support the operation of the UE 1000. Examples of such data include instructions for any applications or methods operated on the UE 1000, contact data, phonebook data, messages, pictures, videos, etc. The memory 1004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1006 provides power to various components of the UE 1000. The power component 1006 may include a power management system, at least one power source, and any other components associated with the generation, management, and distribution of power in the UE 1000.

The multimedia component 1008 includes a screen providing an output interface between the UE 1000 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1008 includes a front-facing camera and/or a rear-facing camera. When the UE 1000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1010 is configured to output and/or input audio signals. For example, the audio component 1010 includes a microphone (MIC) configured to receive an external audio signal when the UE 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1013 includes at least one sensor to provide status assessments of various aspects of the UE 1000. For instance, the sensor component 1013 may detect an open/closed status of the UE 1000, relative positioning of components, e.g., the display and the keypad, of the UE 1000, a change in position of the UE 1000 or a component of the UE 1000, a presence or absence of user contact with the UE 1000, an orientation or an acceleration/deceleration of the UE 1000, and a change in temperature of the UE 1000. The sensor component 1013 may include a proximity sensor configured to detect the presence of nearby objects without any physical contact. The sensor component 1013 may also include a light sensor, such as a Complementary Metal Oxide Semiconductor (CMOS) or Charge-Coupled Device (CCD) image sensor, for use in imaging applications. In some embodiments, the sensor component 1013 may also include an accelerometer sensor, a gyroscope sensor, a magnetic sensor, a pressure sensor, or a temperature sensor.

The communication component 1016 is configured to facilitate communication, wired or wirelessly, between the UE 1000 and other devices. The UE 1000 can access a wireless network based on a communication standard, such as Wi-Fi, 2G or 3G, or a combination thereof. In an embodiment, the communication component 1016 receives a broadcast signal from an external broadcast management system or broadcast associated information via a broadcast channel. In an embodiment, the communication component 1016 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 1000 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described methods.

FIG. 11 is a block diagram of a network device 1100 provided by an embodiment of the disclosure. For example, the network device 1100 may be provided as a network device. As illustrated in FIG. 11, the network device 1100 includes a processing component 1111, which further includes at least one processor, and memory resources represented by a memory 1132 for storing instructions, such as application programs, that may be executed by the processing component 1122. The application programs stored in the memory 1132 may include one or more modules each corresponding to a set of instructions. In addition, the processing component 1115 is configured to execute instructions to perform any method described above that is performed at the network device, for example, the method shown in FIG. 1.

The network device 1100 may also include a power component 1126 configured to perform power management of the network device 1100, a wired or wireless network interface 1150 configured to connect the network device 1100 to a network, and an I/O interface 1158. The network device 1100 may operate based on an operating system stored in the memory 1132, such as Windows Server^{™}, Mac OS X^{™}, Unix^{™}, Linux^{™}, FreeBSD^{™}, or the like.

In the above embodiments of the disclosure, the method provided by embodiments of the disclosure are introduced from the perspectives of the network device and the UE respectively. In order to realize each of the functions in the method provided by the above embodiments of the disclosure, the network device and the UE may include a hardware structure and a software module to implement the above-mentioned various functions in the form of a hardware structure, a software module, or a combination of the hardware structure and the software module. A certain function may be implemented in the form of a hardware structure, a software module, or a combination of the hardware structure and the software module.

In the above embodiments of the disclosure, the methods provided in embodiments of the disclosure are described from the perspectives of the network device and the UE, respectively. In order to realize each of the functions in the method provided by the above embodiments of the disclosure, the network device and the UE may include a hardware structure and a software module to implement the above-mentioned various functions in the form of a hardware structure, a software module, or a combination of the hardware structure and the software module. A certain function may be implemented in the form of a hardware structure, a software module, or a combination of the hardware structure and the software module.

Embodiments of the disclosure provide a communication device. The communication device may include a transceiver module and a processing module. The transceiver module may include a sending module and/or a receiving module, the sending module is used for realizing a sending function, and the receiving module is used for realizing a receiving function, and the transceiver module may realize the sending function and/or the receiving function.

The communication device may be a terminal (e.g., the terminal in the method embodiments described above), a device in the terminal, or a device capable of being used together with the terminal. Alternatively, the communication device may be a network device, or a device in the network device, or a device capable of being used together with the network device.

Embodiments of the disclosure provide another communication device. The communication device may be a network device, a terminal (e.g., the terminal in the method embodiments described above), or a chip, a chip system or a processor that supports the network device to realize the above-described methods, or a chip, a chip system or a processor that supports the terminal to realize the above-described methods. The device may be used to realize the methods described in the above method embodiments with reference to the descriptions of the above-described method embodiments.

The communication device may include one or more processors. The processor may be a general purpose processor or a dedicated processor, such as, a baseband processor or a central processor. The baseband processor is used for processing communication protocols and communication data. The central processor is used for controlling the communication device (e.g., a base station, a baseband chip, device terminal, device terminal chip, a central unit (CU), or a distributed unit (DU)), executing computer programs, and processing data of the computer programs.

Optionally, the communication device may further include one or more memories on which a computer program may be stored. When the processor executes the computer program, the communication device is caused to perform the method described in the above method embodiments. Optionally, data may also be stored in the memory. The communication device and the memory may be provided separately or may be integrated together.

Optionally, the communication device may also include a transceiver and an antenna. The transceiver may be referred to as transceiver unit, a transceiver machine, or a transceiver circuit, for realizing the transceiver function. The transceiver may include a receiver and a transmitter. The receiver may be referred to as receiver machine or a receiving circuit, for realizing the receiving function. The transmitter may be referred to as a transmitter machine or a transmitting circuit, for realizing the transmitting function.

Optionally, the communication device may also include one or more interface circuits. The interface circuits are used to receive code instructions and transmit them to the processor. The processor runs the code instructions to cause the communication device to perform the method described in the method embodiments.

When the communication device is implemented as a terminal (e.g., the terminal in the method embodiments described above), the processor is used to perform the method shown in any one of FIGS. 1-6.

When the communication device is implemented as a network device, the transceiver is used to perform the method shown in any of FIGS.7-8.

In an implementation, the processor may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor may store computer programs that can be executed by the processor and may cause the communication device to perform the methods described in the method embodiments above. The computer programs may be solidified in the processor, in which case the processor may be implemented by hardware.

In an implementation, the communication device may include circuits. The circuits may implement the sending, receiving or communicating function in the preceding method embodiments. The processors and transceivers described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal (e.g., the terminal in the method embodiments described above), but the scope of the communication device described in the disclosure is not limited thereto, and the structure of the communication device may not be limited. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

In the case where the communication device may be a chip or a chip system, the chip includes a processor and an interface. There may be one or more processors, and there may be multiple interfaces.

Optionally, the chip further includes a memory used for storing necessary computer programs and data.

It is understandable by those skilled in the art that various illustrative logical blocks and steps listed in embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of embodiments of the disclosure.

Embodiments of the disclosure also provide a system for determining a sidelink duration. The system includes a communication device as a terminal (e.g., the terminal in the above method embodiments) and a communication device as a network device in the preceding embodiments. Or, the system includes a communication device as a terminal (e.g., the terminal in the above method embodiments) and a communication device as a network device in the preceding embodiments.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of embodiments of the disclosure, or indicate the order of precedence.

The term "at least one" in the disclosure may also be described as one or more, and the term "multiple" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A data retransmission method, performed by a receiving user equipment (UE), comprising:
in response to a round trip time (RTT) timer being expired and the receiving UE not sending a physical sidelink feedback channel (PSFCH), determining, based on a hybrid automatic repeat request (HARQ) feedback mode corresponding to the receiving UE, whether to start a retransmission timer.

2. The method of claim 1, wherein determining, based on the HARQ feedback mode corresponding to the receiving UE, whether to start the retransmission timer, comprises at least one of:
in response to the HARQ feedback mode being feeding back a positive acknowledgement (ACK) or a negative acknowledgement (NACK), and data not being successfully received by the receiving UE, starting the retransmission timer;
in response to the HARQ feedback mode being feeding back an ACK or a NACK, starting the retransmission timer;
in response to the HARQ feedback mode being feeding back only a NACK, not starting the retransmission timer; or
in response to the HARQ feedback mode being feeding back only a NACK, data not being successfully received by the receiving UE, and a NACK feedback sent by another UE being received by the receiving UE, starting the retransmission timer.

3. The method of claim 2, further comprising:
in response to starting the retransmission timer, monitoring a physical sidelink control channel (PSCCH) during operation of the retransmission timer.

4. The method of claim 1, further comprising:
starting the RTT timer.

5. The method of claim 4, wherein starting the RTT timer comprises:
in response to the receiving UE not sending a PSFCH, starting the RTT timer in a first time slot after a PSFCH resource location.

6. The method of claim 1, further comprising:
receiving data sent by a transmitting UE by means of multicast.

7. A data retransmission apparatus, comprising:
a determining module, configured to, in response to a round trip time (RTT) timer being expired and a receiving UE not sending a physical sidelink feedback channel (PSFCH), determine, based on a hybrid automatic repeat request (HARQ) feedback mode corresponding to the receiving UE, whether to start a retransmission timer.

8. A communication device comprising a processor and a memory having a computer program stored thereon, wherein when the computer program is executed by the processor, the device is caused to perform the method of any one of claims 1-6.

9. A communication device comprising a processor and an interface circuit, wherein,
the interface circuit is configured to receive code instructions and transmit the code instructions to the processor; and
the processor is configured to run the code instructions to perform the method of any one of claims 1-6.

10. A computer readable storage medium having instructions stored thereon, wherein when the instructions are executed, the method of any one of claims 1-6 is implemented.
